# EUROPÄISCHE PATENTSCHRIFT

(11) **EP 1 346 672 B1**
(45) Veröffentlichungstag und Bekanntmachung des Hinweises auf die Patenterteilung: **08.06.2005**
(21) Anmeldenummer: 03006388.7
(22) Anmeldetag: 20.03.2003
(51) Int. Cl.: A47F 3/00, G02B 6/00

(54) **Vorrichtung zum Beleuchten von Gegenständen und Räumen**
Device used to illuminate objects and rooms
Dispositif pour éclairer d'objets et d'intérieurs

(30) Priorität: 20.03.2002 DE 20204458 U
(43) Veröffentlichungstag der Anmeldung: 24.09.2003
(73) Patentinhaber: Wirtz, Dominic, 66740 Saarlouis (DE)
(72) Erfinder: Wirtz, Dominic, 66740 Saarlouis (DE)
(74) Vertreter: Vièl, Christof, Dipl.-Ing.

(56) Entgegenhaltungen:
- EP-A- 0 870 978
- GB-A- 952 388
- GB-A- 2 139 796
- US-A- 5 079 675
- US-A- 5 211 464

## Beschreibung

Die Erfindung betrifft eine Vorrichtung zum Beleuchten von Gegenständen und Räumen. Insbesondere betrifft die Erfindung eine Vorrichtung zum Beleuchten von Ausstellungsstücken in Geschäften, in Museen und im privaten Bereich, die auch zum Ausleuchten der jeweiligen Räume verwendet werden kann.

Aus der US 4,438,604 ist eine Vorrichtung bekannt, die aus einem mit der Vorderkante schräg nach unten angeordneten Flächenelement besteht, das an seiner Unterseite eine Lichtquelle trägt.

Die GB 952,388 beschreibt eine regalartige Vorrichtung zum Beleuchten eines darauf abgestellten Gegenstandes, die aus einem transparenten Material besteht, an einer Kante eine Lichtquelle aufweist und an der gegenüberliegenden Kante eine sägezahnartig ausgebildete Unterseite aufweist, die das Licht auf den zu beleuchtenden Gegenstand reflektiert.

Weiterhin ist aus der AT 339 537 A ein Schaugestell bekannt, das Ablageborde aus Plexiglas aufweist, wobei im Bereich der Hinterkante der Ablageborde Lichtquellen angeordnet sind. Da die Regalbretter das Licht nach allen Richtungen abstrahlen, wird der Betrachter geblendet und der farbliche Eindruck von auf den Ablageborden angeordneten Gegenständen wird verfälscht.

Die US 3,617,729 A beschreibt eine Vorrichtung zum Beleuchten von Gegenständen, die sich unterhalb eines Regalbretts befinden. Diese Vorrichtung besteht aus einem hohlen Regalbrett mit dahinter angeordneter Lichtquelle, wobei die Innenseiten des Regalbretts mit reflektierendem Material versehen sind, und an der Vorderseite des Regalbretts ein nach unten gerichteter Reflektor angeordnet ist, der das Licht auf die Vorderkante unter dem Regalbrett angeordneter Bücher richtet. Diese Vorrichtung ist allerdings in ihrer Herstellung sehr aufwendig.

Aufgabe der Erfindung ist es, eine - insbesondere indirekte - Beleuchtung für Gegenstände, insbesondere Ausstellungsstücke, und Räume zu schaffen, die eine schatten- und blendfreie Ausleuchtung der Gegenstände bzw. der Räume ermöglicht und dennoch kostengünstig herstellbar ist.

Diese Aufgabe wird erfindungsgemäß dadurch gelöst, daß ein Flächenelement aus lichtdurchlässigem Material vorgesehen ist, das an einer der Hauptflächen und an einer seiner Kanten mit einer Licht reflektierenden Schicht versehen ist und daß im Bereich der dieser Kante gegenüberliegenden Kante des Flächenelementes eine Lichtquelle angeordnet ist.

Auf diese Weise werden mittels flächiger Lichtabstiahlung durch die nicht mit der reflektierenden Schicht versehene Hauptfläche des Flächenelementes in dem dieser zugewandten Bereich angeordnete Gegenstände oder auch Bereiche eines Raumes schattenfrei und ohne Blendwirkung für den Betrachter ausgeleuchtet. Bei einer entsprechenden Zahl bzw. Größe von Vorrichtungen können diese auch zum gänzlichen Ausleuchten von Räumen verwendet werden. Durch die reflektierende Schicht wird praktisch das gesamte Licht auf den auszuleuchtenden Gegenstand geleitet, so daß dieser mit relativ geringem Energiebedarf ausgeleuchtet werden kann.

Das Flächenelement kann hierbei beliebige Größen aufweisen und beispielsweise als Aufsatz für eine Taschenlampe, die die Lichtquelle darstellt, ausgebildet sein oder aber mit einer Lichtquelle kombiniert eine Taschenlampe darstellen, ebenso wie es möglich ist, daß das Flächenelement mehrere Quadratmeter umfaßt und beispielsweise als Tischplatte oder Regalboden dient.

Eine Weiterbildung der Erfindung besteht darin, daß auch die übrigen Kanten des Flächenelementes mit Licht reflektierendem Material versehen sind.

Hierdurch wird sichergestellt, daß auch über die übrigen Kanten kein Lichtaustritt erfolgt (sondern nur über die nicht mit der reflektierenden Schicht versehene Hauptfläche), eine diesbezügliche Blendwirkung vermieden und das gesamte Licht auf den zu beleuchtenden Gegenstand geleitet wird.

Es liegt im Rahmen der Erfindung, daß das lichtdurchlässige Material mit Partikeln versetztes Glas bzw. mit Partikeln versetzter Kunststoff ist.

Durch die Versetzung des Materials mit Partikeln wird die Streuung des Lichtes erhöht und es ergibt sich ein "welcheres" Licht als mit herkömmlichem Material. Insbesondere PMMA mit darin eingebetteten farbneutralen Diffusorpartikeln ist hierfür geeignet.

Eine andere Ausbildung der Erfindung besteht darin, daß das lichtdurchlässige Material und/oder die Lichtquelle aus Milchglas besteht.

Bei Milchglas gilt entsprechendes: Auch hier wird die Streuung des Lichtes erhöht. Milchglas kann beispielsweise durch Sandstrahlen mit Quarzsand, Glasperlen, Granulat und Korund erzeugt werden.

Ebenfalls liegt es im Rahmen der Erfindung, daß das lichtdurchlässige Material eine Färbung aufweist.

Auf diese Weise können besondere Beleuchtungseffekte hervorgerufen werden.

Eine Weiterbildung der Erfindung besteht darin, daß auf den mit einer Licht reflektierenden Schicht versehenen Bereichen eine weitere Schicht aus Holz, Kunststoff, Glas, Metall oder Textil angeordnet ist.

Da in diesen Bereichen die reflektierende Schicht aufgebracht ist, kann über dieser je nach den jeweiligen Anforderungen eine weitere Schicht aus beliebigem Material aufgebracht werden.

Weiterhin ist es zweckmäßig, daß Mittel vorgesehen sind, um das Flächenelement horizontal oder vertikal anzuordnen.

Wenn das Flächenelement beispielsweise als Regalboden dienen soll, bedarf es einer entsprechenden Aufhängung. Diese kann praktisch in beliebiger Weise (z.B. über Konsolträger, Winkel, etc.) erfolgen, wobei sichergestellt sein muß, daß die Lichtquelle die Hinterkante des Flächenelementes beleuchten kann. Die Vorrichtung kann bei vertikaler oder horizontaler Anbringung (mit der Licht abstrahlenden Hauptfläche nach oben oder unten) als Lichtquelle verwendet werden (Flachlampe).

Ebenso ist es zweckmäßig, daß Mittel vorgesehen sind, um das Flächenelement mit der Vorderkante nach unten bzw. oben geneigt anzuordnen.

Bei vielen Ausstellungsstücken (z.B. Schuhen) bietet es sich an, die Flächenelemente mit der Vorderkante nach unten geneigt anzuordnen, da dadurch - insbesondere bei tief angeordneten Regalen - ein besserer Einblick des Betrachters ermöglicht wird. Bei Neigung des Flächenelementes nach oben kann das Flächenelement als reines Beleuchtungselement verwendet werden.

Erfindungsgemäß ist auch vorgesehen, daß mehrere Flächenelemente übereinander angeordnet sind.

Die Flächenelemente werden dann beispielsweise an einer Wand, in der die Lichtquellen angeordnet sind, montiert, wobei insbesondere die Ausleuchtung der auf einem Flächenelement angeordneten Gegenstände jeweils durch das darüber bzw. darunter gelegene Flächenelement erfolgt.

Es ist vorteilhaft, daß zwei Flächenelemente beidseits einer gemeinsamen Lichtquelle angeordnet sind.

So ist es möglich, zwei in einer Ebene angeordnete Flächenelemente mit einer mittigen Lichtquelle zu versehen, was den Aufwand an Elektroinstallation und den Stromverbrauch reduziert.

Eine Weiterbildung der Erfindung besteht darin, daß die Lichtquelle in dem Flächenelement angeordnet ist.

Die Integration der Lichtquelle in das Flächenelement ermöglicht es zum einen, diese mit geringst möglichem Installationsaufwand anzubringen. Die Flächenelemente können dann statt herkömmlicher Regalböden verwendet werden und es muß nur noch ein Anschluß an das Stromnetz erfolgen.

Eine andere Ausbildung der Erfindung besteht darin, daß das Flächenelement zylindrisch ausgebildet ist.

Bei dieser Augestaltung wird eine Lampe geschaffen, bei der die Lichtquelle zweckmäßigerweise im unteren Bereich angeordnet ist und die Lichtabstrahlung über die Außen- oder die Innenseite des Flächenelementes erfolgt.

Weiterhin ist es vorteilhaft, daß die Lichtquelle eine Neonröhre oder eine LED ist.
Diese beiden Lichtquellen zeichnen sich zum einen durch einen relativ geringen Stromverbrauch aus und erhitzen sich zum anderen relativ wenig. Gerade LED bieten sich an, wenn die Lichtquelle in dem Flächenelement angeordnet ist.

Im Rahmen der Erfindung liegt auch die Verwendung der erfindungsgemäßen Vorrichtung als Regalboden.

Im folgenden wird ein Ausführungsbeispiel der Erfindung anhand einer Zeichnung erläutert.

Es zeigt
- Fig. 1: eine geschnittene Darstellung einer erfindungsgemäßen Vorrichtung,
- Fig. 2: eine erfindungsgemäße Vorrichtung mit integrierter Lichtquelle als Regalboden,
- Fig. 3: eine erfindungsgemäße Vorrichtung in zylindrischer Form als Lampe.

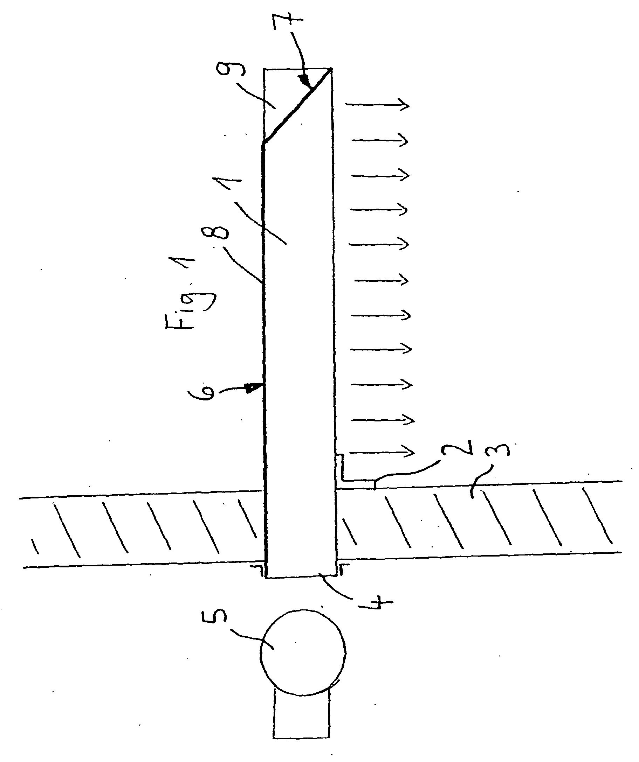

Wie in Fig. 1 dargestellt, besteht die erfindungsgemäße Vorrichtung aus einem Flächenelement 1 von beispielsweise rechteckiger Form, das aus lichtdurchlässigem Material, z.B. Glas oder Kunststoff besteht. Das Material kann mit Partikeln durchsetzt sein, um die Streuung des Lichtes zu erhöhen oder gefärbt sein.

Das Flächenelement 1 ist mit geeigneten Mitteln 2, z.B. Winkeln, an einer Rückwand 3 befestigt (horizontal oder mit der Vorderkante nach unten geneigt) und im Bereich seiner Hinterkante 4 ist eine Lichtquelle 5 angeordnet. An der Oberseite 6, der Vorderkante 7 und eventuell auch der Seitenkante ist das Flächenelement 1 mit Licht reflektierendem Material 8 (z.B. Spiegelfolie) beschichtet, so daß das Licht in diesen Bereichen reflektiert wird.

Die Vorderkante des Flächenelementes 1 ist im vorliegenden Beispiel um 45° nach unten abgeschrägt und die Abschrägung ist mit Licht reflektierendem Material 8 beschichtet, um die Lichtreflexion nach unten zu verstärken. Auf das Licht reflektierende Material 8 ist eine keilförmige Schicht 9 aus einem beliebigen Material (z.B. Holz) aufgebracht, so daß der Querschnitt des Flächenelementes 1 wieder rechteckig ist.

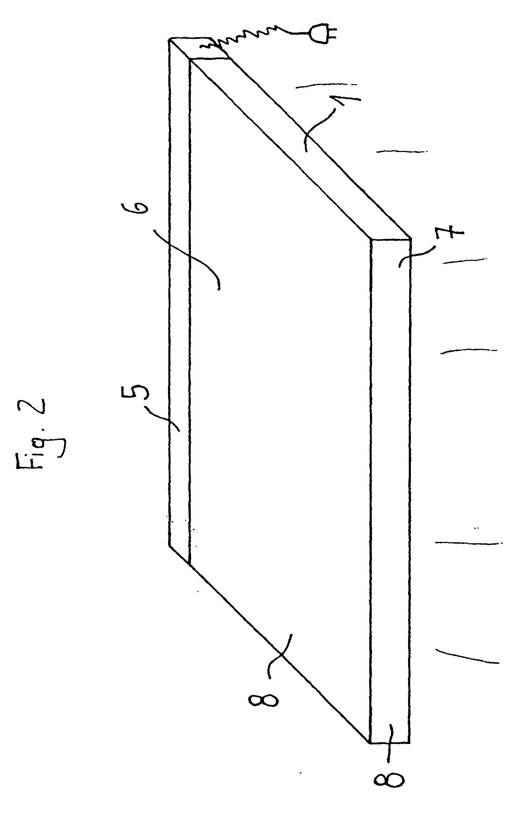

Wie Fig. 2 zeigt, kann die Lichtquelle 5 direkt in das Flächenelement 1 integriert sein, so daß dieses direkt als Regalboden verwendet werden kann.

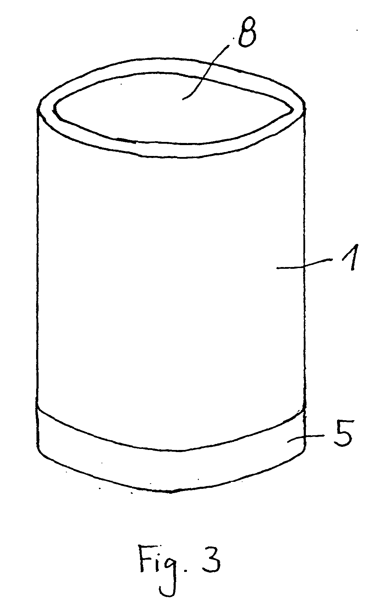

Fig. 3 zeigt eine Lampe aus einem zylindrisch angeordneten Flächenelement 1, bei der die Lichtquelle 5 im unteren Bereich angeordnet ist.

## Patentansprüche

1. Vorrichtung zum Beleuchten von Gegenständen oder Räumen, die aus einem Flächenelement (1) aus lichtdurchlässigem Material besteht, **dadurch gekennzeichnet dass** das Flächenelement (1) einer der Hauptflächen (6) und an einer seiner Kanten (7) mit einer Licht reflektierenden Schicht (8) versehen ist und daß im Bereich der dieser Kante (7) gegenüberliegenden Kante (4) des Flächenelementes (1) eine Lichtquelle (5) angeordnet ist.

2. Vorrichtung gemäß Anspruch 1, **dadurch gekennzeichnet, daß** auch die übrigen Kanten des Flächenelementes (1) mit Licht reflektierendem Material (8) versehen sind.

3. Vorrichtung gemäß Anspruch 1, **dadurch gekennzeichnet, daß** das lichtdurchlässige Material mit Partikeln versetztes Glas bzw. mit Partikeln versetzter Kunststoff ist.

4. Vorrichtung gemäß Anspruch 3, **dadurch gekennzeichnet, daß** das lichtdurchlässige Material und/oder die Abdeckung der Lichtquelle (5) aus Milchglas besteht.

5. Vorrichtung gemäß einem der Ansprüche 1 bis 4, **dadurch gekennzeichnet, daß** das lichtdurchlässige Material eine Färbung aufweist.

6. Vorrichtung gemäß Anspruch 1, **dadurch gekennzeichnet, daß** auf den mit einer Licht reflektierenden Schicht (8) versehenen Bereichen (6, 7) eine weitere Schicht (9) aus Holz, Kunststoff, Glas, Metall oder Textil angeordnet ist.

7. Vorrichtung gemäß Anspruch 1, **dadurch gekennzeichnet, daß** Mittel (2) vorgesehen sind, um das Flächenelement (1) horizontal oder vertikal anzuordnen.

8. Vorrichtung gemäß Anspruch 1, **dadurch gekennzeichnet, daß** Mittel (2) vorgesehen sind, um das Flächenelement (1) mit der Vorderkante (7) nach unten geneigt anzuordnen.

9. Vorrichtung gemäß Anspruch 5 oder Anspruch 6, **dadurch gekennzeichnet, daß** mehrere Flächenelemente (i) übereinander angeordnet sind.

10. Vorrichtung gemäß Anspruch 5 oder Anspruch 6, **dadurch gekennzeichnet, daß** zwei Flächenelemente (1) beidseits einer gemeinsamen Lichtquelle (5) angeordnet sind.

11. Vorrichtung gemäß Anspruch 1, **dadurch gekennzeichnet, daß** die Lichtquelle in dem Flächenelement (1) angeordnet ist.

12. Vorrichtung gemäß Anspruch 1, **dadurch gekennzeichnet, daß** das Flächenelement zylindrisch ausgebildet ist.

13. Vorrichtung gemäß einem der Ansprüche 1 bis 12, **dadurch gekennzeichnet, daß** die Lichtquelle (5) eine Neonröhre bzw. eine oder mehrere LEDs sind.

14. Verwendung der Vorrichtung gemäß den Ansprüchen 1 bis 13 als Regalboden.

## Claims

1. A device for the illumination of objects or rooms, which consists of a planar element (1) of light-permeable material, **characterised in that** the planar element (1) is provided on one of its principal surfaces (6) and on one of its edges (7) with a light-reflecting coating (8), and that a light source (5) is located in the vicinity of that edge (4) of the planar element (1) that is opposite the coated edge (7).

2. The device of claim 1, **characterised in that** the other edges, too, of the planar clement (1) are coated with light-reflecting material (8).

3. The device of claim 1, **characterised in that** the light-permeable material is glass interspersed with particles or plastic interspersed with particles.

4. The device of claim 3, **characterised in that** the light-permeable material and/or the cover for the light source (5) consist(s) of milk glass.

5. A device according to one of the claims 1 to 4, **characterised in that** the light-permeable material is coloured.

6. The device of claim 1, **characterised in that** an additional layer (9) of wood, plastic, glass, metal or textile material is applied on the areas (6, 7) provided with a light-reflecting coating (8).

7. The device of claim 1, **characterised in that** means (2) are provided for positioning the planar element (1) horizontally or vertically.

8. The device of claim 1, **characterised in that** means (2) are provided for positioning the planar element (1) with its front edge (7) sloping downwards.

9. The device of claim 5 or claim 6, **characterised in that** a plurality of planar elements (1) are mounted one above the other.

10. The device of claim 5 or claim 6, **characterised in that** two planar laments (1) are mounted one on cach side of a common light source (5).

11. The device of claim 1, **characterised in that** the light source is integrated in the planar element (1).

12. The device of claim 1, **characterised in that** the planar element is configured cylindrically.

13. A device according to one of the claims 1 to 12, **characterised in that** the light source (5) is a neon tube or one or more LEDs.

14. Use of the device according to the claims 1 to 13 as a shelf.

## Revendications

1. Dispositif pour l'éclairage d'objets ou de pièces, constitué d'un élément de surface (1) en matériau transparent à la lumière, **caractérisé en ce que** l'élément de surface (1) est muni sur une de ses surfaces principales (6) et sur un de ses bords (7) d'une couche (8) réfléchissant la lumière et **en ce qu'**une source de lumière (5) est disposée dans la zone du bord (4) opposé audit bord (7) de l'élément de surface (1).

2. Dispositif selon la revendication 1, **caractérisé en ce que** même les autres bords de l'élément de surface (1) sont munis d'un matériau (8) réfléchissant la lumière.

3. Dispositif selon la revendication 1, **caractérisé en ce que** le matériau transparent à la lumière est du verre contenant des particules ou du plastique contenant des particules.

4. Dispositif selon la revendication 3, **caractérisé en ce que** le matériau transparent à la lumière et/ou le couvercle de la source de lumière (5) sont en verre opale.

5. Dispositif selon l'une des revendications 1 à 4, **caractérisé en ce que** le matériau transparent à la lumière est coloré.

6. Dispositif selon la revendication 1, **caractérisé en ce qu**'une couche supplémentaire (9) en bois, plastique, verre, métal ou textile est disposée sur les zones (6, 7) munies d'une couche (8) réfléchissant la lumière.

7. Dispositif selon la revendication 1, **caractérisé en ce que** des moyens (2) sont prévus pour disposer l'élément de surface (1) horizontalement ou verticalement.

8. Dispositif selon la revendication 1, **caractérisé en ce que** des moyens (2) sont prévus pour disposer l'élément de surface (1) avec le bord antérieur (7) incliné vers le bas.

9. Dispositif selon la revendication 5 ou 6, **caractérisé en ce que** plusieurs éléments de surface (1) sont disposés les uns au-dessus des autres.

10. Dispositif selon la revendication 5 ou 6, **caractérisé en ce que** deux éléments de surface (1) sont disposés de part et d'autre d'une source de lumière (5) commune.

11. Dispositif selon la revendication 1, **caractérisé en ce que** la source de lumière est disposée dans l'élément de surface (1).

12. Dispositif selon la revendication 1, **caractérisé en ce que** l'élément de surface a la forme d'un cylindre.

13. Dispositif selon l'une des revendications 1 à 12, **caractérisé en ce que** les sources de lumière (5) sont un tube néon ou une ou plusieurs LED.

14. Utilisation du dispositif selon les revendications 1 à 13 comme tablette de rayonnage.
